# EUROPÄISCHE PATENTSCHRIFT

(11) **EP 1 595 589 B1**
(45) Veröffentlichungstag und Bekanntmachung des Hinweises auf die Patenterteilung: **21.07.2010**
(21) Anmeldenummer: 05103627.5
(22) Anmeldetag: 02.05.2005
(51) Int. Cl.: B01D 29/07, B01D 29/96

(54) **Kompaktes Filterelement**
Compact filter element
Elément de filtration compact

(30) Priorität: 11.05.2004 DE 102004023107
(43) Veröffentlichungstag der Anmeldung: 16.11.2005
(73) Patentinhaber: MANN+HUMMEL GmbH, 71638 Ludwigsburg (DE)
(72) Erfinder: Bauder, Ralf, 68775, Ketsch (DE); Münkel, Karlheinz, 75038, Oberderdingen-Flehingen (DE)

(56) Entgegenhaltungen:
- EP-A- 1 008 375
- GB-A- 281 124
- US-A- 1 759 827
- US-A- 2 599 604
- US-A- 5 858 227
- US-A- 5 967 111

## Beschreibung

### Stand der Technik

Die Erfindung betrifft ein kompaktes Filterelement, insbesondere aus mehreren übereinander geschichteten Filterlagen, zur Filtrierung von Fluiden, das zusammen mit einem festen Deckel in eine Filteranordnung einfügbar ist.

Aus der DE 197 20 775 A1 ist eine solche Filtervorrichtung zur Flüssigkeitsabscheidung in Gasströmen bekannt, bei der ein Filterelement aus Faservlieslagen aufgebaut ist und mit einem Deckel und einem Boden sowie gegebenenfalls mit Stützelementen versehen ist, so dass mit dieser Anordnung ist ein flexibel anpassbares Filterelement geschaffen werden kann.

Aus der US 2.599.604 ist ein Filtersystem mit einem Filtergehäuse zu entnehmen, dass im äußeren Bereich eine Dichtung mit einem Filterelement verbunden ist. Das Filtergehäuse weist einen Flüssigkeitszulauf und einen Flüssigkeitsablauf auf. Der Flüssigkeitsablauf ist zentrisch innerhalb des Gehäuses angeordnet und nimmt die vom Filterelement gereinigte Flüssigkeit konzentrisch auf. Das Gehäuse ist mit einem Deckel verschlossen. Die Fixierung des Deckels erfolgt an einem Gehäuserahmen. Der Deckel besitzt eine zentrisch angeordnete Öffnung, über die eine Befestigungsschraube einführbar ist.

### Aufgabenstellung

Der Erfindung liegt die Aufgabe zugrunde, ein Filterelement so weiterzubilden, dass ein kompaktes Filterelement mit einem Deckel gleichzeitig eine optimale Führung des zu filternden Fluides gewährleistet.

### Vorteile der Erfindung

Die Erfindung betrifft ein kompaktes Filterelement, bei dem in vorteilhafter Weise eine Mehrzahl von Filtervlieslangen stirnseitig in einen Deckel fest integriert sind. Eine.Umlenkung des im Deckel anströmenden zu filtriertenden Fluids erfolgt gemäß der Erfindung in derart vorteilhafter Weise, dass das fluid jeweils in den übernächsten Bereich zwischen zwei Filtervlieslagen einströmt durch die Filtervlieslagen aus dem jeweils dazwischenliegenden Bereich herausströmt.

Gemäß der Erfindung bestehen die Filtervlieslagen aus um einen Wickelkern fortlaufend herumgeführten Wickellagen. Der Wickelkern und die herumgeführten Wickellagen sind mit einer gewellten Kontur versehen.

### Zeichnungen

Ein Ausführungsbeispiel des erfindungsgemäßen Filterelements wird anhand der Figuren der Zeichnung erläutert. Es zeigen:
Figur 1 einen Schnitt durch ein gewickeltes in einen Deckel integriertes kompaktes Filterelement,
Figur 2 einen weiteren Schnitt durch das Filterelement nach der Figur 1, aus dem der ovale Querschnitt des Wickelkerns zu entnehmen ist,
Figur 3 einen Detailschnitt durch das erfindungsgemäße Filterelement mit einer Darstellung des Stroms der zu filternden Flüssigkeit und
Figuren 4 bis 7 ein weiteres Ausführungsbeispiel des erfindungsgemäßen Filterelements in Schnitt- und Außendarstellungen.

### Beschreibung des Ausführungsbeispiels

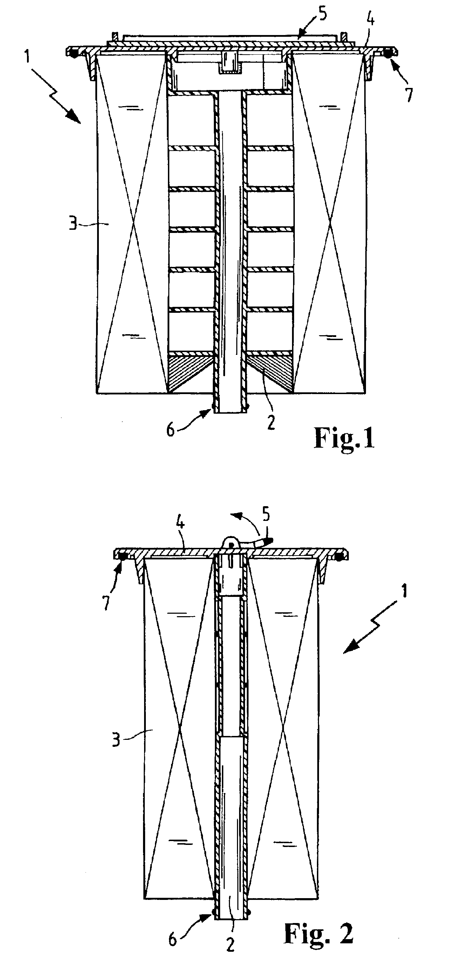

In Figur 1 ist ein Filterelement 1 gezeigt, das aus einem um einen Wickelkern 2 gewickelte Filtervlieslagen 3 besteht. Eine zu filternde Flüssigkeit strömt in einer weiter unten noch erläuterten Weise über den Wickelkern 2 bzw. von außen durch die Filtervlieslagen 3.

Diese Anordnung ist mit einem Deckel 4 fest verbunden, z.B. in diesen eingeklebt, der eventuell mit einem hochklappbaren Griff 5 versehen werden kann, und bildet somit eine kompakte Einheit eines Filterelements 1, das als Einheit beispielsweise über eine einrastbare Rohrverbindung 6 und über eine Dichtung 7 in ein hier nicht dargestelltes Filtergehäuse eingefügt werden kann.

In Figur 2 ist die Anordnung nach der Figur 1 in einer um 90° versetzten Schnittebene zu sehen, wobei erkennbar ist, dass der Wickelkern 2 einen ovalen Querschnitt aufweist. Hierbei ist aber auch ein anderer geeigneter, beispielsweise runder, Querschnitt anwendbar.

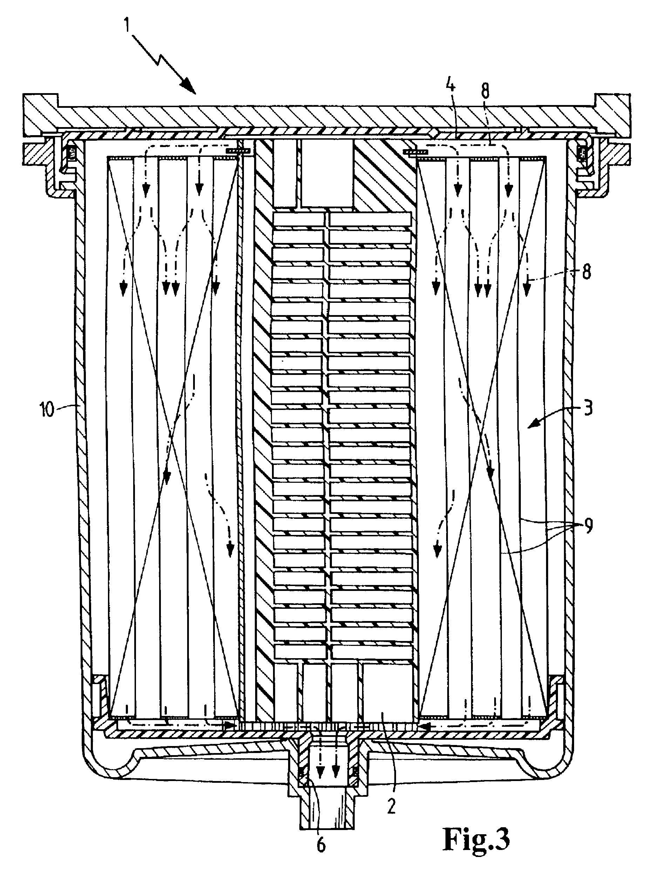

Aus Figur 3 ist erkennbar, wie das zu filternde Fluid, bzw. eine Flüssigkeit gemäß der Pfeile 8 in die Lagen 9 der Filtervlieslagen 3 einströmt. Die Einzellagen 9 sind dabei derart in den Deckel 4 des Filterelements 1 eingeklebt, dass sich eine Umlenkung der Flüssigkeit in die jeweils übernächste Zwischenlage der Filtervlieslagen 3 ergibt. Dieses somit kompakt aufgebaute Filterelement 1 mit den deckelfixierten Filtervlieslagen 3 kann auf einfache Weise in ein Filtergehäuse 10 eingefügt werden.

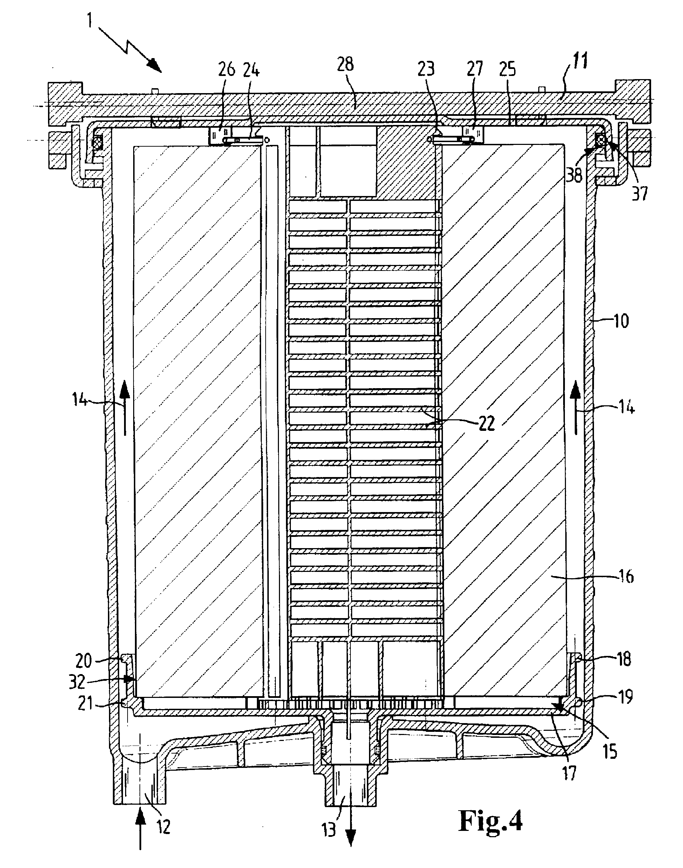

Figur 4 zeigt ein Filtersystem mit einem Gehäuse 10, das durch einen Deckel 11 abgeschlossen werden kann. Das Gehäuse weist einen Einlauf 12 für die zu reinigende Flüssigkeit und einen Auslauf 13 für die gereinigte Flüssigkeit auf. Die zu reinigende Flüssigkeit strömt von dem Einlauf 12, ausgehend gemäß dem Pfeil 14, nach oben und vor dort, wie in Figur 3 gezeigt, durch das Filterelement hindurch. Die Flüssigkeit sammelt sich im Bereich 15 und strömt von dort radial nach innen zwischen Filterelement 16 und Bodenplatte 17 zu dem Auslauf 13. Die Bodenplatte 17 ist mit dem Filterelement 16, beispielsweise mittels einer Klebeverbindung, gekoppelt. Die Bodenplatte stützt sich über Noppen 18, 19, 20, 21 sowie weitere hier nicht dargestellt Noppen an dem Gehäuse 10 ab. Das Filterelement 10 selbst ist auf einen Kern 22 aufgewickelt, der zur Materialreduzierung mit axial verlaufenden Durchbrüchen versehen ist. Der Kern weist im oberen Bereich Haltenasen bzw. eine umlaufende Haltezone auf, die derart gestaltet ist, dass eine Federscheibe 24 eine axiale Fixierung des Filterelements 16 bewirkt. Gleichzeitig dient die Federscheibe zur Fixierung des Filterelements und des Kerns 22 an einem Deckel 25. Dieser Deckel ist hierzu mit Haltestegen 26, 27 versehen, welche mit der Federscheibe 24 in Eingriff stehen, so dass das Filterelement über die Federscheibe 24 und die Haltestege 26, 27 mit dem Deckel derart verbunden ist, dass eine Herausnahme dieser Teile aus dem Gehäuse 10 in einfacher Weise erfolgen kann.

Die Abdichtung zwischen Gehäuse 10 und Deckel 25 erfolgt über einen geeigneten Dichtring 37. Dieser ist in einer entsprechend ausgeformten Nut 38 des Gehäuses 10 verliersicher angeordnet.

Oberhalb des Deckels 25 befindet sich eine Welle, die Teil einer Hebelanordnung ist. Diese Hebelanordnung wird weiter unten näher erläutert. Da das Filterelement 16 unmittelbar auf den Kern 22 aufgewickelt ist, kann keine verschmutzte Flüssigkeit längs des Kerns in den Reinflüssigkeitsbereich abfließen.

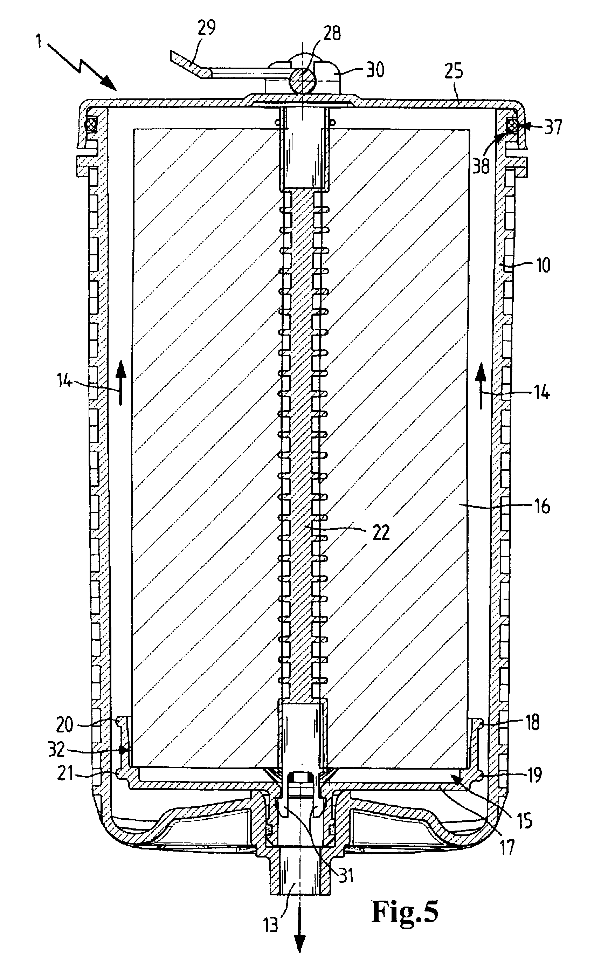

Figur 5 zeigt das in Figur 4 dargestellte Element in einer um 90° geschwenkten Ansicht. Gleiche Teile sind mit den gleichen Bezugszeichen versehen. Die Hebelvorrichtung ist hier deutlich zu erkennen. Die Welle 28 ist mit einem Griff 29 versehen. Die Welle 28 selbst ist in einer oder mehreren Lageraufnahmen 30 positioniert. Es ist aus dieser Figur ersichtlich, dass der Kern 22 über eine Rastverbindung mit der Bodenplatte 17, und zwar über die Rastverbindung 31, fixiert ist. Die Bodenplatte selbst ist im Bereich 32 mit dem Filterelement 16 umlaufend verklebt.

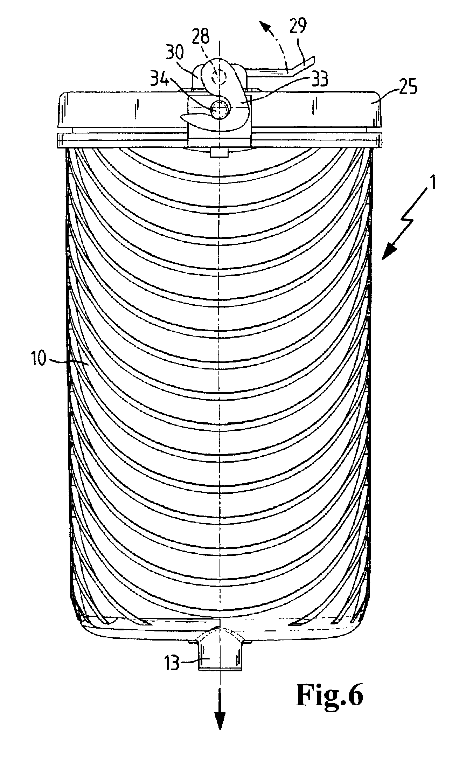

Figur 6 zeigt eine Außenansicht des in Figur 4 und Figur 5 dargestellten Filtersystems. Hier ist der Auslauf für die gereinigte Flüssigkeit zu erkennen sowie das Befestigungsprinzip für das Filterelement selbst mit dem Griff 29 und der Lageraufnahme 30. An der Welle 28 befindet sich an beiden Stirnseiten ein Greifhaken 33. Dieser umfasst an beiden Seiten jeweils einen Fixierzapfen 34. In der hier gezeigten Stellung ist das Filtersystem verschlossen. Wird der Griff 29 umgelegt, so kann der Deckel gelöst und das Filterelement aus dem Gehäuse entnommen werden.

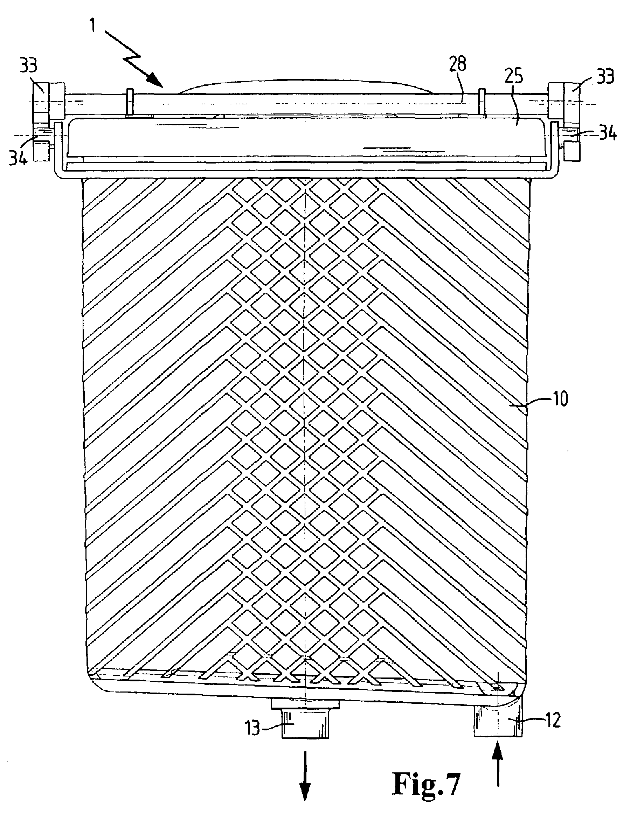

Figur 7 zeigt eine weitere Außenansicht des in Figur 4 und Figur 5 dargestellten Filtersystems. Aus dem Vergleich der Figuren 6 und 7 lässt sich entnehmen, dass es hier um ein im Wesentlichen oval gestaltetes System handelt. In Figur 7 ist der Einlauf 12 sowie der Auslauf 13 zu erkennen, ebenso die Welle 28 mit den beiden Haken 33 und den Zapfen 34.

## Patentansprüche

1. Kompaktes Filterelement, bei dem eine Mehrzahl von Filtervlieslagen (3) stirnseitig in einen Deckel (4) fest integriert sind und bei dem eine Umlenkung des im Deckel (4) anströmenden zu filtrierenden Fluids derart erfolgt, dass das Fluid jeweils in den übernächsten Bereich zwischen zwei Filtervlieslagen (3) einströmt durch die Filtervlieslagen (3) aus dem jeweils dazwischenliegenden Bereich herausströmt, **dadurch gekennzeichnet** das die Filtervlieslagen (3) aus um einen Wickelkern (2) fortlaufend herumgeführten Wickellagen (9) besteht, und wobei die Filtervlieslagen (3) eine gewellte Kontur aufweisen, und die Filtervlieslagen (3) in den Deckel (4) eingeklebt sind.

2. Filterelement nach Anspruch 1, **dadurch gekennzeichnet, dass** der Wickelkern (2) und die herumgeführten Wickellagen (9) einen ovalen Querschnitt aufweisen.

3. Filterelement nach Anspruch1, **dadurch gekennzeichnet, dass** der Wickelkern (2) und die herumgeführten Wickellagen (9) einen runden Querschnitt aufweisen.

## Claims

1. Filter element in which a plurality of filter fleece layers (3) are firmly integrated in a cover (4) at the front side and in which the fluid to be filtered and flowing into the cover (4) is deflected in such a way that the fluid flows into the next but one area between two filter fleece layers (3) and spills out of the filter fleece layers (3) from the area located in-between, **characterized in that** the filter fleece layers (3) consist of winding layers (9) passed around a roll core (2) and the filter fleece layers (3) featuring an undulated profile and the filter fleece layers (3) being glued into the cover (4).

2. Filter element according to claim 1, **characterized in that** the roll core (2) and the winding layers (9) passed around it feature an oval cross section.

3. Filter element according to claim 1, **characterized in that** the roll core (2) and the winding layers (9) passed around it feature a round cross section.

## Revendications

1. Elément filtrant dans lequel plusieurs couches de tissu filtrant (3) sont intégrées de manière fixe à l'avant dans un couvercle (4) et dans lequel le fluide à filtrer arrivant dans le couvercle (4) est dévié de manière à ce que le fluide entre respectivement dans la deuxième section suivant deux couches de tissu filtrant (3) et sorte, en traversant les couches de tissu filtrant (3), de la section respectivement située entre ces deux couches, **caractérisé en ce que** les couches de tissu filtrant (3) sont constituées de couches bobinées (9) évoluant de manière continue autour d'un axe de bobine (2), les couches de tissu filtrant (3) présentant un contour ondulé et les couches de tissu filtrant (3) étant collées dans le couvercle (4).

2. Elément filtrant selon la revendication 1, **caractérisé en ce que** l'axe de bobine (2) et les couches bobinées (9) font preuve d'une section ovale.

3. Elément filtrant selon la revendication 1, **caractérisé en ce que** l'axe de bobine (2) et les couches bobinées (9) font preuve d'une section ronde.
